# EUROPÄISCHE PATENTANMELDUNG

(11) **EP 1 225 536 A1**
(43) Veröffentlichungstag der Anmeldung: **24.07.2002**
(21) Anmeldenummer: 02100017.9
(22) Anmeldetag: 15.01.2002
(51) Int. Cl.: G06K 7/00

(54) **Verfahren zur Kollisionsfreien Datenübertragung zwischen einer Basisstation und einer Anzahl beweglicher Datenträger**

(30) Priorität: 16.01.2001 DE 10101918
(71) Anmelder: Philips Corporate Intellectual Property GmbH, 52066 Aachen (DE); Koninklijke Philips Electronics N.V., 5621 BA Eindhoven (NL)
(72) Erfinder: Wenzel, Dirk, Dr. c/o Philips Corporate, 52066, Aachen (DE); Tobergte, Wolfgang, Dr. c/o Philips Corporate, 52066, Aachen (DE)
(74) Vertreter: Volmer, Georg, Dipl.-Ing.

(57) **Zusammenfassung**

Verfahren zum Übertragen von Datensignalen zwischen einer Basisstation und einer Anzahl beweglicher Datenträger, in welcher die Basisstation zur Aufnahme einer Datenübertragung ein Kommandosignal aussendet, auf welches von Datenträgern, die dieses Kommandosignals empfangen, je ein Antwortsignal an die Basisstation gesendet wird, worauf von der Basisstation einer der Datenträger für eine Datenübertragung ausgewählt und exklusiv bei diesem ausgewählten Datenträger die Datenübertragung vom Datenträger an die Basisstation ausgelöst wird.

Bei einem solchen Verfahren ist erfindungsgemäß den Signalen, die von der Basisstation für einen ausgewählten (d.h. selektierten) Datenträger (d.h. Transponder) exklusiv gesendet werden, ein Auswahlcode angefügt, durch den Signale als von der Basisstation für einen ausgewählten Datenträger exklusiv gesendet markiert sind, und wird in allen von der Basisstation zuvor nicht für eine Datenübertragung ausgewählten Datenträgern das Aussenden von Datensignalen an die Basisstation auf den Empfang eines von der Basisstation gesendeten, einen Auswahlcode umfassenden Datensignals hin unabhängig vom übrigen Inhalt dieses von der Basisstation gesendeten Datensignals unterdrückt.

Das Verfahren gewährleistet auf einfache Weise in Systemen mit beweglichen Transpondern eine eindeutige Unterscheidung zwischen exklusiv an einen selektierten Transponder zu übertragenden Datensignalen und solchen Datensignalen, die auch für nicht selektierte Transponder bestimmt sind. Sie ermöglicht eine sichere Datenübertragung und damit eine Verminderung der Fehlerrate Dies wird sowohl bei Systemen mit verschlüsselter Datenübertragung zum Transponder als auch bei unverschlüsselter Datenübertragung erreicht. Das jeweils angewendete Verschlüsselungsverfahren ist davon nicht berührt.

## Beschreibung

Die Erfindung bezieht sich auf ein Verfahren zum Übertragen von Datensignalen zwischen einer Basisstation und einer Anzahl beweglicher Datenträger, in welcher die Basisstation zur Aufnahme einer Datenübertragung ein Kommandosignal aussendet, auf welches von Datenträgern, die dieses Kommandosignals empfangen, je ein Antwortsignal an die Basisstation gesendet wird, worauf von der Basisstation einer der Datenträger für eine Datenübertragung ausgewählt und exklusiv bei diesem ausgewählten Datenträger die Datenübertragung vom Datenträger an die Basisstation ausgelöst wird

Bewegliche Datenträger der vorbezeichneten Art, im folgenden auch "Transponder" genannt und bevorzugt für einen kontaktlosen Datenaustausch mit der auch als "Lesegerät" bezeichneten Basisstation ausgestaltet, werden im allgemeinen zur Identifikation oder als Datenspeicher an beweglichen Teilen eingesetzt. Beispiele für derartige Datenträger sind insbesondere kontaktlose Chipkarten in Zugangskontrollsystemen, Einrichtungen für Wegfahrsperren im Kraftfahrzeugschlüssel, elektronische Gepäckmarken ("Kofferanhänger") zur automatischen Verteilung und Sortierung von Gepäckstücken im Gepäckverkehr, z.B. auf Flughäfen sowie elektronische Speicher zur Sortierung und Verfolgung beim Pakettransport.

Alle diese Anwendungen besitzen eine Basisstation, die Daten mit den Transpondern austauscht. Die vorliegende Erfindung bezieht sich insbesondere auf Systeme, die eine Basisstation und eine Anzahl beweglicher Datenträger umfassen, mit nur einem Übertragungskanal (z.B. eine ISM Frequenz), bei welchen Systemen sich mehrere Transponder gleichzeitig im Lesebereich der Basisstation, d.h. insbesondere in deren Signalübertragungsreichweite, aufhalten können. Transponder kommen neu hinzu oder verlassen den Lesebereich in dem Maße, in dem sie z.B. mit den Gepäckstücken, an denen sie befestigt sind bei dem vorgesehenen Transport räumlich bewegt werden.

Um bei derartigen Systemen einen sicheren Datenaustausch zwischen der Basisstation und dem Transponder zu gewährleisten, werden Datenübertragungsverfahren angewendet, bei denen die Basisstation das eingangs genannte Kommandosignal sendet und der Transponder auf dieses Kommandosignal mit dem eingangs genannten Antwortsignal antwortet (sogenannte "Reader-Talks-First-Systeme'' bzw. "Reader-Talks-First-Verfahren"). Mittels eines sogenannten "Antikollisionsverfahrens", mit welchem die Antwortsignale der Transponder anschließend in der Basisstation ausgewertet werden, können die Transponder nacheinander einzeln durch ein sogenanntes "Antikollisionskommando" selektiert werden. Danach können Datensignale von der Basisstation ausschließlich zum durch das "Antikollisionskommando" selektierten Transponder geschrieben, d.h. übertragen, oder von diesem gelesen werden. Alle anderen, nicht selektieren Transponder müssen hierbei die von der Basisstation zum selektierten Transponder zu übertragenden bzw. übertragenen Datensignale und die darin für den selektierten Transponder enthaltenen Kommandos ignorieren.

Es hat sich gezeigt, daß bei der Ausführung dieses Datenübertragungsverfahrens zwei Probleme auftreten.

Zunächst soll angenommen werden, daß die Basisstation mit einem selektierten ersten Transponder Datensignale austauscht. Falls nun ein nicht selektierter zweiter Transponder genau dann in den Lesebereich eintritt - bespielsweise in den Wirkungsbereich eines von der Basisstation zwecks Übertragung der Datensignale ausgesendeten Magnetfeldes verbracht wird - während die Datensignale ( mit darin enthaltenen Kommandos ausschließlich für den selektierte ersten Transponder) zum selektierten ersten Transponder gesendet werden, empfängt dieser selektierte erste Transponder nur den letzten Teil des Datensignals von der Basisstation und damit auch nur den letzten Teil der mit diesem Datensignal von derBasisstation an den selektierten ersten Transponder zu übertragenden Daten bzw. Kommandos. Wenn dieses beim Empfang durch den nicht selektierten zweiten Transponder bei diesem zweiten Transponder verstümmelte Datensignal (auch "Datenfragment" genannt") zufällig einem "Antikollisionskommando" aus der Ausführung des erwähnten Antikollisionsverfahrens entspricht, wird der nicht selektierte zweite Transponder ebenfalls antworten, d.h. er wird ein Anrwortsignal an die Basisstation absenden, obgleich diese nur vom selektierten ersten Transponder ein solches Antwortsignal erwartet. Die überlagerten Antwortsignale der beiden Transponder (des selektierten ersten und des nicht selektierten zweiten) lassen sich im Empfänger der Basisstation nicht unterscheiden und führen dadurch zu Datenfehlern.

Ein weiteres Problem entsteht, wenn der Datenaustausch mit dem selektierten ersten Transponder verschlüsselt wird. Die Verschlüsselung der Kommandos der Basisstation wird damit auf beliebige Daten abgebildet. Hierbei ist nicht auszuschließen, daß ein verschlüsseltes Kommando einem "Antikollisionskommando" entspricht. Damit können sowohl der selektierte erste als auch der nicht selektierte zweite Transponder - und darüber hinaus auch alle anderen Transponder, die sich gerade im Lesebereich der Basisstation aufhalten - gleichzeitig antworten. Auch diese Überlagerung der Antwortsignale führt zu Datenfehlern.

Die Erfindung hat die Aufgabe, durch eine einfache Ausbildung des vorstehend beschriebenen Verfahrens zum Datenaustausch zwischen Basisstation und Transpondern die geschilderten Probleme zu vermeiden.

Erfindungsgemäß wird diese Aufgabe bei einem Verfahren der eingangs genannten Art dadurch gelöst, daß den Signalen, die von der Basisstation für einen ausgewählten (d.h. selektierten) Datenträger (d.h. Transponder) exklusiv gesendet werden, ein Auswahlcode angefügt ist, durch den diese Signale als von der Basisstation für einen ausgewählten Datenträger exklusiv gesendet markiert sind, und daß in allen von der Basisstation zuvor nicht für eine Datenübertragung ausgewählten Datenträgern das Aussenden von Datensignalen an die Basisstation auf den Empfang eines von der Basisstation gesendeten, einen Auswahlcode umfassenden Datensignals hin unabhängig vom übrigen Inhalt dieses von der Basisstation gesendeten Datensignals unterdrückt wird

In einer bevorzugten Ausführungsform des erfindungsgemäßen Verfahrens wird der Auswahlcode im von der Basisstation gesendeten Datensignal unverschlüsselt übertragen, und zwar auch dann, wenn die übrigen Bestandteile des Datensignals verschlüsselt sind

In einer weiteren Fortbildung des erfindungsgsmäßen Verfahrens ist der Auswahlcode im von der Basisstation gesendeten Datensignal durch ein einziges Bit (Auswahlcodebit) gebildet.

In einer vorteilhaften Weiterbildung des erfindungsgemäßen Verfahrens nimmt der Aus-Wahlcode im von der Basisstation gesendeten Datensignal einen ersten Wert an, wenn das Datensignal als von der Basisstation für einen ausgewählten Datenträger exklusiv gesendet markiert ist, und nimmt der Auswahlcode im von der Basisstation gesendeten Datensignal einen zweiten Wert an, wenn das Datensignal als von der Basisstation für alle Datenträger gesendet markiert ist.

Ein Ausführungsbeispiel ist in der Zeichnung dargestellt und wird im Nachfolgenden näher erläutert. Dabei zeigen
- Fig. 1: schematisch ein Beispiel für einen Signalverlauf zwischen Basisstation und Transpondern ausgetauschter Datensignale im Verfahren ohne Anwendung eines Auswahlcodes und
- Fig. 2: schematisch ein Beispiel für einen Signalverlauf zwischen Basisstation und Transpondern ausgetauschter Datensignale im Verfahren mit einem Auswahlcode.

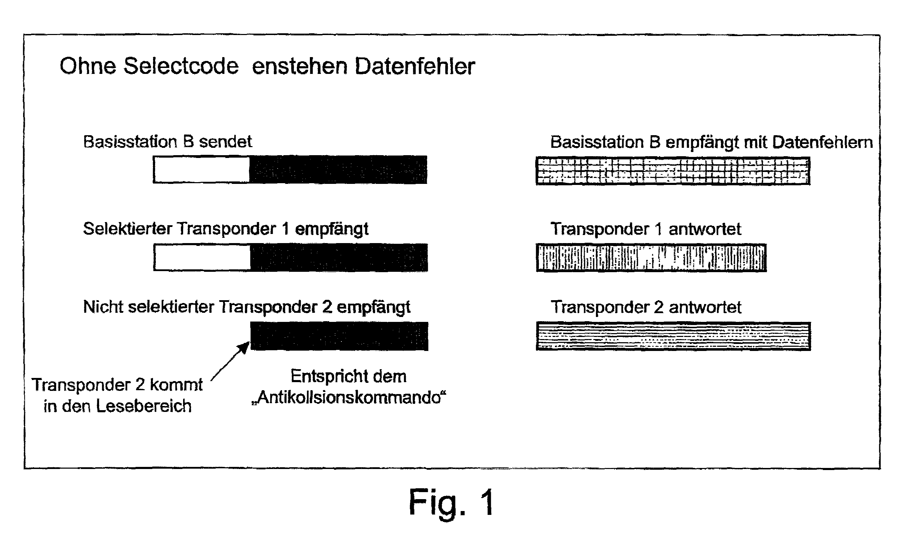

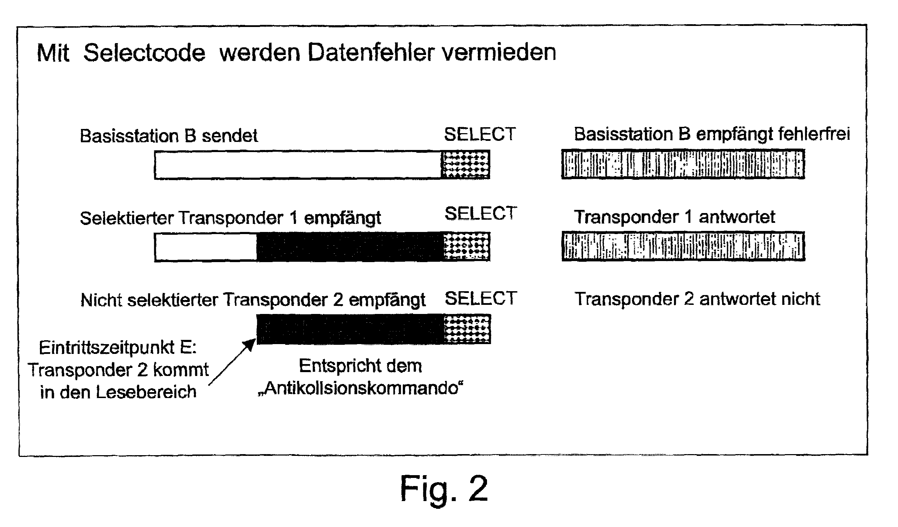

Dargestellt ist entlang einer in den Figuren 1 und 2 waagerecht verlaufenden Zeitachse die zeitliche Abfolge eines von der Basisstation B ausgesendeten Datensignals in der ersten Zeile jeder der Figuren und eines bzw. zweier daraufhin von einem selektierten Transponder 1 bzw. einem nicht selektierten Transponder 2 zurückgesendeten Datensignals bzw. -signale in der zweiten und dritten Zeile jeder der Figuren.

Gemäß der Ausgestaltung der in den Figuren dargestellten Signale wird von der Basisstation B ein Datensignal ausgesandt, welches von einem ersten, mit diesem oder einem voraufgegangenen, nicht dargestellten Datensignal selektierten ersten Transponder 1 in gesamter Länge, von einem zweiten, nicht selektierten Transponder 2 dagegen nur verstümmelt empfangen wird. In der beispielhaften Darstellung der Figuren ist angenommen, daß der nicht selektierte zweite Transponder lediglich den abschließenden Teil des Datensignals empfängt, der zum Eintrittszeitpunkt E beginnt, beispielsweise, weil er gerade zu diesem Eintrittszeitpunkt E während der Zeitspanne, innerhalb derer die Übertragung des Datensignals von der Basisstation B an den selektierten ersten Transponder 1 durchgeführt wird, in den Lesebereich der Basisstation B transportiert wird.

Für die Darstellung des Ausführungsbeispiels wird weiterhin angenommen, daß der abschließende Teil des Datensignals, der zum Eintrittszeitpunkt E beginnt, gerade dem "Antikollisionskommando" der Basisstation B entspricht. In diesem Fall werden gemäß dem in Fig. 1 dargestellten, beispielhaften Signalverlauf sowohl der selektierte erste Transponder 1 als auch der nicht selektierte zweite Transponder 2 antworten, d.h. jeder ein Datensignal an die Basisstation B zurücksenden, wie in Fig. 1 dargestellt. Die Basisstation B empfängt die überlagerten Datensignale von den Transpondern 1 und 2 mit Datenfehlern, da sie die Datensignale nicht trennen kann.

Die vorliegende Erfindung löst die oben beschriebenen Probleme in einfacher Weise, wie dies in Fig. 2 am dort dargestellten, beispielhaften Signalverlauf erkennbar ist. Dazu wird den Daten im Datensignal, welches von der Basisstation B ausgesendet werden soll, ein Auswahlcode SELECT (auch als "Selectcode" bezeichnet) angehängt, der zum Beispiel nur ein Bit lang sein kann und kennzeichnet, ob das mit dem betreffenden Datensignal von der Basisstation B ausgesandte Kommando für den selektierten ersten Transponder 1 oder auch für alle anderen, nicht selektierten Transponder, beispielsweise auch für den nicht selektierten zweiten Transponder 2, gültig ist. Dieser Selectcode steht immer am Ende einer Datenübertragung, d.h. eines Datensignals, von der Basistation B zum Transponder und wird nicht verschlüsselt. Ein Transponder kann damit am Selectcode sicher erkennen, ob es sich um ein Datensignal bzw. Kommando für einen selektierten Transponder handelt. Auch der letzte Teil eines Kommandos oder ein verschlüsseltes Kommando unterscheiden sich damit immer von einem "Antikollisionskommando" der Basisstation B.

Wird ein solches, mit dem Auswahlcode versehenes Datensignal von der Basisstation B ausgesendet, bzw. wird von der Basisstation B ein Datensignal ausgesendet, in welchem der Auswahlcode auf den Wert gesetzt ist, durch den dieses Datensignal als von der Basisstation B für einen ausgewählten Datenträger exklusiv gesendet markiert ist, und wird dieses Datensignal von sowohl dem selektierten ersten Transponder 1 als auch dem nicht selektierten zweiten Transponder 2 empfangen, erkennen beide Transponder 1, 2, daß dieses Datensignal bzw. Kommando ausschließlich für einen bereits selektierten Transponder bestimmt ist. Da der zweite Transponder 2 sich im nicht selektierten Zustand befindet, wird er das empfangene Datensignal bzw. Kommando ignorieren, auch wenn er dessen Inhalt beispielsweise fälschlich als "Antikollisionskommando" erkennen würde, auf das er antworten könnte und auch müßte, wenn der Auswahlcode (bzw. der Wert, den der Auswahlcode annimmt) dies nicht unterdrücken würde.

Dadurch ist sichergestellt, daß lediglich der selektierte erste Transponder 1 antwortet, der nicht selektierte zweite Transponder 2 jedoch in keinem Fall. Die Basisstation B kann das als Antwort vom selektierten ersten Transponder 1 an sie übertragene Datensignal daher fehlerfrei empfangen, da der nicht selektierte zweite Transponder 2 nicht antwortet.

Die vorliegende Erfindung gewährleistet somit auf einfache Weise in Systemen mit beweglichen Transpondern eine eindeutige Unterscheidung zwischen exklusiv an einen selektierten Transponder zu übertragenden Datensignalen und solchen Datensignalen, die auch für nicht selektierte Transponder bestimmt sind. Sie ermöglicht so eine sichere Datenübertragung und damit eine Verminderung der Fehlerrate. Dies wird sowohl bei Systemen mit verschlüsselter Datenübertragung zum Transponder als auch bei unverschlüsselter Datenübertragung erreicht. Das jeweils angewendete Verschlüsselungsverfahren ist davon nicht berührt.

## Patentansprüche

1. Verfahren zum Übertragen von Datensignalen zwischen einer Basisstation (B) und einer Anzahl beweglicher Datenträger (1, 2), in welcher die Basisstation (B) zur Aufnahme einer Datenübertragung ein Kommandosignal aussendet, auf welches von Datenträgern (1, 2), die dieses Kommandosignal empfangen, je ein Antwortsignal an die Basisstation (B) gesendet wird, worauf von der Basisstation (B) einer (1) der Datenträger (1,2) für eine Datenübertragung ausgewählt und exklusiv bei diesem ausgewählten Datenträger (1) die Datenübertragung vom Datenträger (1) an die Basisstation (B) ausgelöst wird,
**dadurch gekennzeichnet, daß** den Signalen, die von der Basisstation (B) für einen ausgewählten Datenträger (1) exklusiv gesendet werden, ein Auswahlcode (SELECT) angerügt ist, durch den diese Signale als von der Basisstation (B) für einen ausgewählten Datenträger (1) exklusiv gesendet markiert sind, und daß in allen von der Basisstation (B) zuvor nicht für eine Datenübertragung ausgewählten Datenträgern (2) das Aussenden von Datensignalen an die Basisstation (B) auf den Empfang eines von der Basisstation(B) gesendeten, einen Auswahlcode (SELECT) umfassenden Datensignals hin unabhängig vom übrigen Inhalt dieses von der Basisstation (B) gesendeten Datensignals unterdrückt wird.

2. Verfahren nach Anspruch 1,
**dadurch gekennzeichnet, daß** der Auswahlcode (SELECT) im von der Basisstation (B) gesendeten Datensignal unverschlüsselt übertragen wird.

3. Verfahren nach Anspruch 1 oder 2,
**dadurch gekennzeichnet, daß** der Auswahlcode (SELECT) im von der Basisstation (B) gesendeten Datensignal durch ein einziges Bit (Auswahlcodebit) gebildet ist.

4. Verfahren nach Anspruch 1, 2 oder 3,
**dadurch gekennzeichnet, daß** der Auswahlcode (SELECT) im von der Basisstation (B) gesendeten Datensignal einen ersten Wert annimmt, wenn das Datensignal als von der Basisstation (B) für einen ausgewählten Datenträger (1) exklusiv gesendet markiert ist, und daß der Auswahlcode (SELECT) im von der Basisstation (B) gesendeten Datensignal einen zweiten Wert annimmt, wenn das Datensignal als von der Basisstation (B) für alle Datenträger (1, 2) gesendet markiert ist.
